Europäisches Patentamt

European Patent Office

Office européen des brevets

(19)

(11) Veröffentlichungsnummer: **0 340 172**
A1

# (12) EUROPÄISCHE PATENTANMELDUNG

(21) Anmeldenummer: 89810309.8

(22) Anmeldetag: 25.04.89

(51) Int. Cl.⁴: **G 01 L 3/12**

(30) Priorität: 27.04.88 CH 1593/88

(43) Veröffentlichungstag der Anmeldung:
02.11.89 Patentblatt 89/44

(84) Benannte Vertragsstaaten:
AT BE CH DE ES FR GB GR IT LI LU NL SE

(71) Anmelder: **ELESTA AG ELEKTRONIK**
**Elestastrasse**
**CH-7310 Bad Ragaz (CH)**

(72) Erfinder: **Schön, Rainer, Dipl.-Ing.**
**Plattenbach 241**
**FL-9496 Balzers (LI)**

(74) Vertreter: **Riederer, Conrad A., Dr.**
**Bahnhofstrasse 10**
**CH-7310 Bad Ragaz (CH)**

(54) **Vorrichtung zum berührungslosen Messen des von einer Welle übertragenen Drehmoments.**

(57) Wenn ein Drehmoment an der Welle (11) auftritt, findet eine Torsion der Welle (11) statt. Die Fensterträger (13, 15) bewegen sich dabei relativ zueinander, wodurch der Querschnitt eines von der Strahlungsquelle (25) ausgehenden, durch die Fenster (37, 37') gehenden ersten Strahlungsbündels verändert wird. Ein zweites Strahlenbündel geht durch die Fenster (39, 39'). Das erste und das zweite Strahlenbündel fallen auf eine einzige im Kurzschlussbetrieb arbeitende Differenzial-Fotodiode (32). Die von dieser erzeugten Signale werden miteinander verglichen oder verknüpft, um ein von Lichtstärkeänderungen der Strahlungsquelle (25) praktisch unabhängiges Ausgangssignal zu erzeugen, welches sehr genau dem übertragenen Drehmoment in der positiven oder negativen Drehrichtung entspricht. Das Drehmoment kann dann durch eine Anzeigeeinheit (35) angezeigt werden. Das Ausgangssignal kann aber auch dazu benutzt werden, um beim Erreichen eines vorbestimmten Drehmoments z.B. eine Abschaltung eines Motors vorzunehmen.

Fig.1

Bundesdruckerei Berlin

EP 0 340 172 A1

## Beschreibung

### Vorrichtung zum berührungslosen Messen des von einer Welle übertragenen Drehmoments

Die vorliegende Erfindung betrifft eine Vorrichtung mit einer Strahlungsquelle, einem ersten und einem zweiten Strahlungsempfänger und zwei in axialem Abstand voneinander auf einer ein Drehmoment übertragenden Welle angeordneten Fensterträgern, die sich entsprechend der durch das übertragene Drehmoment bewirkten Torsion der Welle relativ zueinander verdrehen und je mit zwei Gruppen von Fenstern versehen sind. Eine solche Vorrichtung ist beispielsweise in der GB-A-417 051 beschrieben. Diese vorbekannte Vorrichtung, die für die Messung des Drehmoments der Antriebsachse von Schiffspropellern konzipiert wurde, ist nicht in der Lage, den Drehrichtungssinn festzustellen. Nachteilig ist auch, dass sie eine sehr komplizierte Auswerteschaltung benötigt. Die Auswerteschaltung erfordert viel Platz und eignet sich daher nicht zum Einbau in ein kleines Gerät.

Es ist Aufgabe der vorliegenden Erfindung, mindestens einen Teil der genannten Nachteile zu vermeiden.

Dies wird gemäss der Erfindung bei einer Vorrichtung der eingangs erwähnten Art dadurch erreicht, dass die beiden Gruppen von Fenstern derart ausgebildet und angeordnet sind, dass beim Auftreten eines Drehmoments in der einen Richtung der Querschnitt des ersten Strahlenbündels verändert wird und der Querschnitt des anderen Strahlenbündels konstant bleibt und beim Auftreten eines Drehmoments in der anderen Richtung der Querschnitt des zweiten Strahlenbündels verändert wird und der Querschnitt des ersten Strahlenbündels konstant bleibt, und dass eine Auswerteschaltung an die beiden Strahlungsempfänger angeschlossen ist, welche ein Ausgangssignal als Funktion des Drehmoments erzeugt.

Zweckmässigerweise wird der erste und der zweite Strahlungsempfänger zusammen durch eine einzige im Kurzschlussbetrieb arbeitende Differenz-Fotodiode gebildet. Im Kurzschlussbetrieb nimmt der Kurzschlussstrom mit der Beleuchtungsstärke linear zu. Dies ermöglicht eine sehr genaue Messung minimalem Aufwand.

Vorteilhaft wird vorgesehen, dass der Steg zwischen den Fenstern halb so breit ist wie das Fenster und dass im torsionsfreien Zustand der Welle durch den Steg auf dem einen Fensterträger das Fenster auf dem anderen Fensterträger zur Hälfte abgedeckt wird. Weiter ist die Vorrichtung zweckmässigerweise dadurch gekennzeichnet, dass die Auswerteschaltung einen ersten und einen zweiten Impedanzwandler für das Ausgangssignal des ersten bzw. des zweiten Strahlungsempfängers aufweist, dass der Ausgang des ersten Impedanzwandlers an den ersten Eingang eines Differenzverstärkers und einer Minimumsignal-Auswahlschaltung angeschlossen ist, dass der Ausgang des zweiten Impedanzwandlers an einen zweiten Eingang des Differenzverstärkers und der Minimumsignal-Auswahlschaltung angeschlossen ist, dass der Ausgang des Differenzverstärkers an den ersten Eingang eines Multiplizierers angeschlossen ist, dessen Ausgang den Ausgang der Auswahlschaltung darstellt, dass der Ausgang der Minimumsignal-Auswahlschaltung an einen Vorverstärker angeschlossen ist, dessen Ausgang mit dem ersten Eingang einer Quotientenstufe verbunden ist, deren zweiter Eingang mit einer Spannungsquelle verbunden ist, und dass die Quotientenstufe einen Ausgang aufweist, der an den zweiten Eingang des Multiplizierers angeschlossen ist. Dies hat den weiteren Vorteil, dass bei einer Veränderung der Lichtintensität, wie sie beispielsweise durch veränderte Geometrie oder der Alterung hervorgerufen werden kann, während der Messung Nullpunkt und Beleuchtungswert dynamisch korrigiert werden.

Ausführungsbeispiele der Erfindung werden nun unter Bezugnahme auf die Zeichnung beschrieben. Es zeigt:

Figur 1 Eine schematische, nicht massstäbliche Darstellung eines Ausführungsbeispiels einer Vorrichtung zur berührungslosen Messung,

Figur 2 die Stellung der Fenster, wenn kein Drehmoment wirksam ist,

Figur 3 die Stellung der Fenster, wenn ein Drehmoment in der angezeigten Richtung wirksam ist,

Figur 4 die Stellung der Fenster, wenn das maximale Drehmoment in der eingezeichneten Richtung wirksam ist,

Figur 5 die Stellung der Fenster, wenn ein Drehmoment in der zu Figur 3 entgegengesetzten Richtung wirksam ist,

Figur 6 die Stellung der Fenster, wenn das maximale Drehmoment in der eingezeichneten Richtung wirksam ist,

Figur 7 ein Blockschema betreffend eine Vorrichtung mit Fenstern gemäss den Figuren 2 bis 7,

Figur 8 der Spannungsverlauf als Funktion des Drehwinkels.

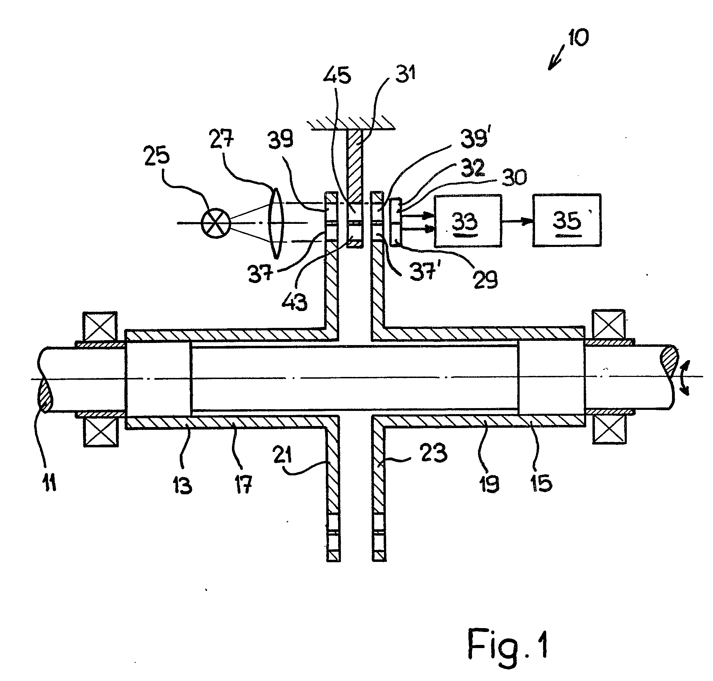

Bei der Vorrichtung 10 (Fig. 1) sind auf einer drehbaren Welle 11 in einem Abstand voneinander zwei Fensterträger 13, 15 angeordnet. Jeder Fensterträger 13, 15 besitzt einen rohrförmigen Teil 17, 19. Ein Ende des jeweiligen rohrförmigen Teils 17, 19 ist mit der Welle 11 verbunden, während das andere Ende eine mit Fenstern versehene Scheibe 21, 23 trägt. Die Scheiben 21, 23 befinden sich dicht nebeneinander. Als Strahlungsquelle 25 dient z.B. eine Lichtquelle in Form einer Fotodiode. Die Strahlung von der Strahlungsquelle 25 wird durch den Kollimator 27 kollimiert und kann durch Fenster 37, 37'; 39, 39' in der ersten und zweiten Scheibe 21, 23 auf eine Empfangseinrichtung 32 fallen. Die Empfangseinrichtung 32 weist einen ersten und einen zweiten Strahlungsempfänger 29, 30 auf. Im Strahlungsgang befindet sich die feststehende Blende 31. Die Empfangseinrichtung 32 ist an die Auswerteschaltung 33 angeschlossen. Diese ist ihrerseits mit der Anzeigevorrichtung 35 verbunden, welche das Drehmoment und den Drehsinn anzeigt.

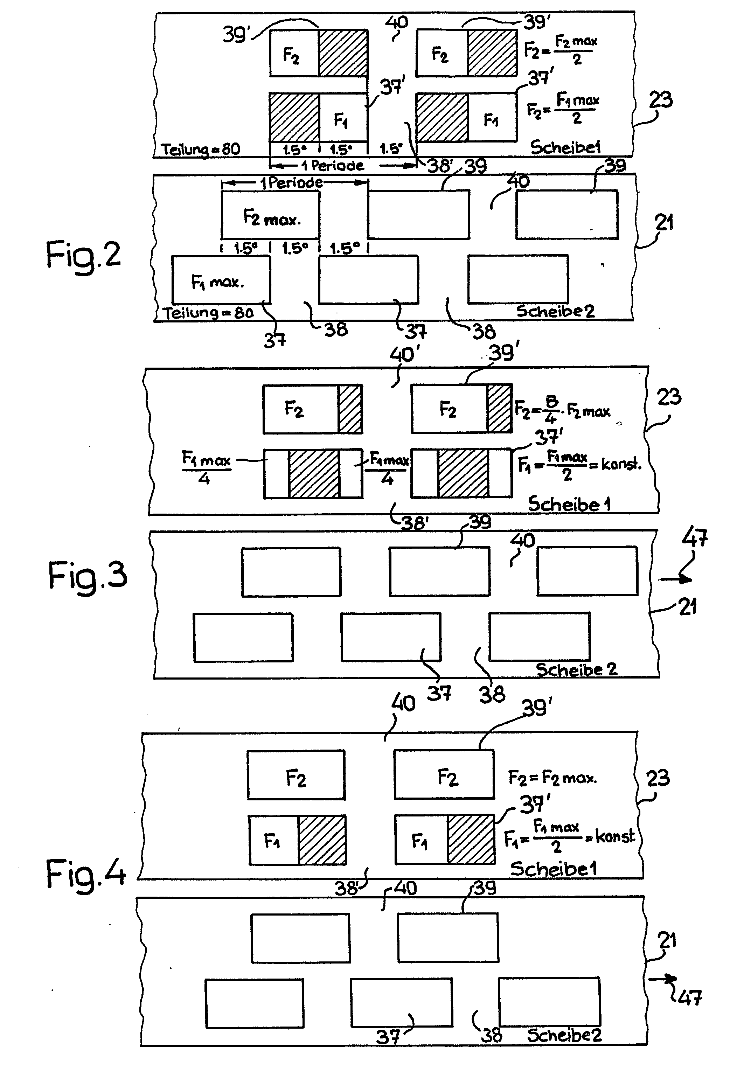

Die Blende 31 weist zwei Oeffnungen 43 und 45 auf. Die Oeffnung 43 enspricht den Fenstern 37, 37' und die Oeffnung 45 entspricht den Fenstern 39, 39' (Fig. 2). Diesen Oeffnungen 43 und 45 entsprechen wiederum zwei Strahlungsempfänger 29, 30 der Empfangseinrichtung 32. Die Oeffnungen 43 und 45 entsprechen jeweils den Abmessungen eines Fensters und eines Steges oder eines Vielfachen davon.

In den nachfolgenden Figuren 2 bis 6 sind die Ausschnitte mit den Fenstern aus Gründen der zeichnerischen Vereinfachung nicht als Teile einer Scheibe mit relativ kleinem Durchmesser dargestellt, wie dies einer tatsächlichen Ausführung entsprechen würde. Man kann sich aber die gezeichneten Ausschnitte als Teile einer Scheibe mit sehr grossem Durchmesser vorstellen.

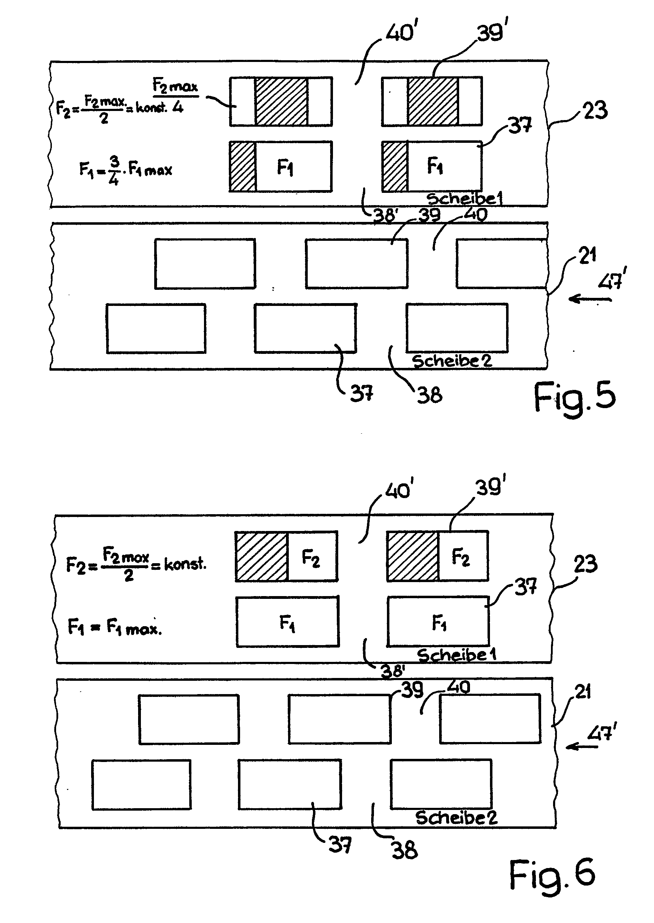

Die Anordnung der Fenster und Stege ist von grosser Bedeutung. Wie Fig. 2 zeigt, befindet sich jeweils zwischen je zwei Fenstern 37 der ersten Scheibe 21 ein Steg 38. Zwischen je zwei Fenstern 39 der ersten Scheibe 21 befindet sich jeweils ein Steg 40. Zwischen je zwei Fenstern 37' der zweiten Scheibe befindet sich jeweils ein Steg 38'. Zwischen je zwei Fenstern 39' der zweiten Scheibe befindet sich jeweils ein Steg 40'. Im drehmomentlosen Zustand (Fig. 2) ist das jeweilige Fenster 39 in bezug auf das Fenster 39' der Scheibe 23 um eine ganze Fensterbreite nach rechts verschoben, während das jeweilige Fenster 37 in bezug auf das Fenster 37' der Scheibe 23 um eine ganze Fensterbreite nach links verschoben ist. Die Stege 38 und 40 besitzen eine halbe Fensterbreite und decken die Fenster 37' auf der linken Seite und das Fenster 39' auf der rechten Seite je zur Hälfte ab, was durch Schraffuren angezeigt ist. Wird ein Drehmoment in Richtung des Pfeils 47 in Fig. 3 wirksam, so bleibt der Querschnitt des ersten Strahlenbündels, welches durch die Fenster 37, 37' führt, konstant, wie dies die Figuren 3 und 4 zeigen. Dagegen nimmt der Querschnitt des zweiten Strahlenbündels, welches durch die Fenster 39, 39' führt, mit steigendem Drehmoment in Richtung des Pfeils 47 zu (Figur 3 und 4). Erfolgt hingegen ein Drehmoment in umgekehrter Richtung (Pfeil 47' Fig. 5 und 6), so liegen die Verhältnisse gerade umgekehrt. Es bleibt der Querschnitt des zweiten Strahlenbündels durch die Fenster 39, 39' konstant, während der Querschnitt des ersten Strahlenbündels durch die Fenster 37, 37' zunimmt.

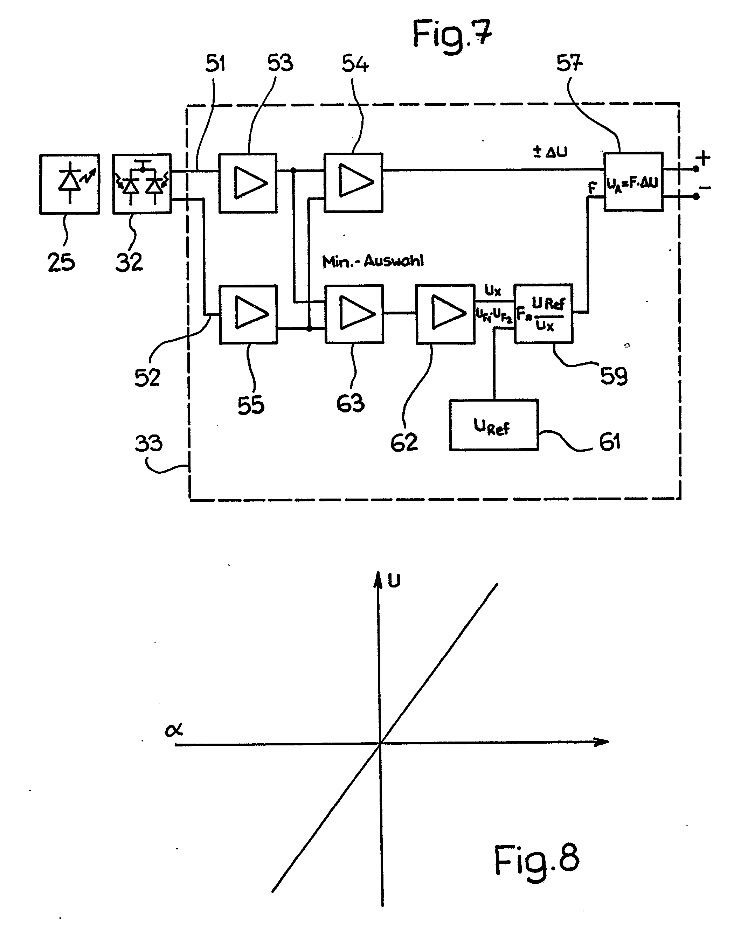

In Figur 7 ist ein Blockschema der Vorrichtung zum berührungslosen Messen des Drehmoments dargestellt. Bei diesem Ausführungsbeispiel der erfindungsgemässen Vorrichtung dient eine Leuchtdiode als Strahlungsquelle 25 und eine im Kurzschlussbetrieb arbeitende Differential-Fotodiode als Empfangseinrichtung 32.

Die Empfangseinrichtung 32 besitzt zwei Ausgänge 51, 52. Das am Ausgang 51 auftretende erste Ausgangssignal wird durch das durch die Fenster 37, 37' und die Blendenöffnung 43 (Fig. 1) fallende Licht der Strahlungsquelle 25 verursacht. Das am Ausgang 52 auftretende zweite Ausgangssignal wird durch das durch die Fenster 39, 39' und die Blendenöffnung 45 (Fig. 1) fallende Licht verursacht. Die Ausgänge 51 und 52 sind an die Impedanzwandler 53 bzw. 55 angeschlossen. Der Ausgang des Impedanzwandlers 53 führt zu einem ersten Eingang eines Differenzverstärkers 54 und zum ersten Eingang einer Minimumsignal-Auswahlschaltung 63. Der Ausgang des Differenzverstärkers 54 ist an einen ersten Eingang eines Multiplizierers 57 angeschlossen. Der Ausgang des Impedenzwandlers 55 führt zu einem zweiten Eingang des Differenzverstärkers 54 und zu einem zweiten Eingang der Minimumsignal-Auswahlschaltung 63. Die Schaltung 63 dient dazu, festzustellen, welches Signal der Ausgänge 51, 52 konstant bleibt, um dann das konstante Signal über den Verstärker 62 der Quotientenstufe 59 zuzuschalten. Dadurch werden auch durch Aenderungen der Beleuchtungsstärke während einer Drehmomenterzeugung verursachte Signalschwankungen dynamisch korrigiert. In diesem Zusammenhang kann bemerkt werden, dass zwar ein gleichbleibender Querschnitt eines Strahlenbündels ein konstantes Signal am Ausgang 51 oder 52 erzeugt, dass aber bei einer Schwankung der Ausgangsleistung der Strahlungsquelle auch das grundsätzlich konstante Signal entsprechend schwankt. Dadurch ergeben sich aber keine Messfehler, weil eben eine automatische Korrektur erfolgt. Der Ausgang der Quotientenstufe 59 ist an den zweiten Eingang des Multiplizierers 57 angeschlossen. Der Ausgang des Multiplizierers 57 liefert ein Signal, welches sehr genau dem übertragenen Drehmoment in der positiven oder negativen Drehrichtung entspricht und somit dazu benutzt werden kann, das gemessene Drehmoment auf einer Anzeigevorrichtung 35 (Fig. 1) anzuzeigen. Das genannte Signal kann aber auch noch andersweitig genutzt werden, z.B. um beim Erreichen eines vorbestimmten Drehmoments eine Abschaltung eines Motors vorzunehmen, eine Kupplung zu lösen, usw.

Es sind verschiedene Aenderungen des Verfahrens und der Vorrichtung möglich, ohne vom Prinzip der Erfindung abzuweichen. So können beispielsweise die Quotientenstufen und Multiplizierer auch durch Logarithmierer, e-Funktionsgeneratoren oder Differenzverstärker ersetzt werden.

**Patentansprüche**

1. Vorrichtung mit einer Strahlungsquelle (25), einem ersten und einem zweiten Strahlungsempfänger (29, 30) und zwei in axialem Abstand voneinander auf ein Drehmoment übertragenden Welle (11) angeordneten Fensterträgern (13, 15), die sich entsprechend der durch das übertragene Drehmoment bewirkten Torsion der Welle (11) relativ zueinander verdrehen und je mit zwei Gruppen von Fenstern (37, 37'; 39, 39') versehen sind, dadurch gekennzeichnet, dass die beiden Gruppen von Fenstern (37, 37'; 39, 39') derart ausgebildet und angeordnet sind, dass beim Auftreten eines Drehmoments in der einen Richtung der Querschnitt des ersten Strahlenbundels verändert wird und der Querschnitt des anderen Strahlenbündels konstant bleibt und beim Auftreten eines Drehmoments in der anderen Richtung der Querschnitt des zweiten Strahlenbündels verändert wird und der Querschnitt des ersten Strahlenbündels konstant bleibt, und dass eine Auswerteschaltung an die beiden Strahlungsempfänger (29, 30) angeschlossen ist, welche ein Ausgangssignal als Funktion des Drehwinkels erzeugt.

2. Vorrichtung nach Anspruch 1, dadurch gekennzeichnet, dass der erste und der zweite Strahlungsempfänger (29, 30) zusammen durch eine einzige im Kurzschlussbetrieb arbeitende Differenzial-Fotodiode (32) gebildet wird.

3. Vorrichtung nach Anspruch 1 oder 2, dadurch gekennzeichnet, dass der Steg (38, 38'; 40, 40') zwischen den Fenstern (37, 37'; 39, 39') halb so breit ist wie das Fenster und dass im torsionsfreien Zustand der Welle (11) durch den Steg auf dem einen Fensterträger (13) das Fenster auf dem anderen Fensterträger (15) zur Hälfte abgedeckt wird.

4. Vorrichtung nach Anspruch 3, dadurch gekennzeichnet, dass die Auswerteschaltung (33) einen ersten und einen zweiten Impedanzwandler (53, 55) für das Ausgangssignal des ersten bzw. des zweiten Strahlungsempfängers (29, 30) aufweist, dass der Ausgang des ersten Impedanzwandlers (53) an den ersten Eingang eines Differenzverstärkers (54) und einer Minimumsignal-Auswahlschaltung (63) angeschlossen ist, dass der Ausgang des zweiten Impedanzwandlers (55) an einen zweiten Eingang des Differenzverstärkers (54) und der Minimumsignal-Auswahlschaltung (63) angeschlossen ist, dass der Ausgang des Differenzverstärkers (54) an den ersten Eingang eines Multiplizierers (57) angeschlossen ist, dessen Ausgang den Ausgang der Auswahlschaltung (33) darstellt, dass der Ausgang der Minimumsignal-Auswahlschaltung (63) an einen Vorverstärker (62) angeschlossen ist, dessen Ausgang mit dem ersten Eingang einer Quotientenstufe (59) verbunden ist, deren zweiter Eingang mit einer Spannungsquelle (61) verbunden ist, und dass die Quotientenstufe (59) einen Ausgang aufweist, der an den zweiten Eingang des Multiplizierers (57) angeschlossen ist.

Fig. 1

**Fig.2**

$F_2 = \frac{F_2 \, max}{2}$

$F_2 = \frac{F_1 \, max}{2}$

Teilung = 80

1.5° 1.5° 1.5°

1 Periode

Scheibe 1

1 Periode

$F_2$ max.

1.5° 1.5° 1.5°

$F_1$ max.

Teilung = 80

Scheibe 2

**Fig.3**

$F_2 = \frac{B}{4} \cdot F_2 \, max$

$\frac{F_1 \, max}{4}$  $\frac{F_1 \, max}{4}$  $F_1 = \frac{F_1 \, max}{2} = konst.$

Scheibe 1

Scheibe 2

**Fig.4**

$F_2 = F_2 \, max.$

$F_1 = \frac{F_1 \, max}{2} = konst.$

Scheibe 1

Scheibe 2

$$F_2 = \frac{F_{2\,max}}{2} = konst. \quad \frac{F_{2\,max}}{4}$$

$$F_1 = \frac{3}{4} \cdot F_{1\,max}$$

Fig. 5

$$F_2 = \frac{F_{2\,max}}{2} = konst.$$

$$F_1 = F_{1\,max}.$$

Fig. 6

## Fig.7

51  53  54                                    57

$\pm \Delta U$

$U_A = F \cdot \Delta U$

+

−

Min.- Auswahl

F

$U_x$

$U_{F_1} \cdot U_{F_2}$   $F = \dfrac{U_{Ref}}{U_x}$

25  32

52

55  63  62

$U_{Ref}$

33

59

61

## Fig.8

U

α

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 938 890 (E.R. FLAVELL) * Zusammenfassung; Spalte 5, Zeilen 58-68; Spalte 6, Zeilen 1-24; Figuren 5,7 * | 1 | G 01 L 3/12 |
| Y,D | GB-A- 417 051 (A.S. FITZGERALD) * Seite 2, Zeilen 30-98; Seite 8, Zeilen 53-61; Figuren * | 1 | |
| Y | US-A-3 111 028 (M.J. LEBOW) * Spalte 2, Zeilen 32-72; Spalte 3, Zeilen 1-41; Figuren * | 1 | |
| A | PATENT ABSTRACTS OF JAPAN, Band 10, Nr. 387 (P-530)[2444], 25. Dezember 1986, Seite 167 P 530; & JP-A-61 176 829 (NIPPON SOKEN INC.) 08-08-1986 * Zusammenfassung * | 2 | |
| A | SOVIET INVENTION ILLUSTRATED, Woche K37, 26. Oktober 1983, Derwent Publications Ltd., London, GB; & SU-A-974 158 (MACH TRACTOR DEPOT) 15-11-1982 * Zusammenfassung * | 3 | RECHERCHIERTE SACHGEBIETE (Int. Cl.4)  G 01 L 3 |

Der vorliegende Recherchenbericht wurde für alle Patentansprüche erstellt

| Recherchenort | Abschlußdatum der Recherche | Prüfer |
|---|---|---|
| DEN HAAG | 21-07-1989 | VAN ASSCHE P.O. |